# EUROPÄISCHE PATENTANMELDUNG

(11) **EP 1 782 939 A2**
(43) Veröffentlichungstag der Anmeldung: **09.05.2007**
(21) Anmeldenummer: 06022691.7
(22) Anmeldetag: 31.10.2006
(51) Int. Cl.: B29C 51/04, B29C 51/26, B29C 51/10

(54) **Formwerkzeug zum Formen oder zum kombinierten Formen und Ausstanzen von Behältern aus einer Folienbahn aus thermoplastischem Kunststoff**

(30) Priorität: 03.11.2005 DE 102005052913
(71) Anmelder: ILLIG Maschinenbau GmbH & Co. KG, 74081 Heilbronn (DE)
(72) Erfinder: Kratochwil, Klaus, 74078 Heilbronn-Biberach (DE); Trautwein, Herbert, 71737 Kirchberg (DE); Teller, Marcus, 74078 Heilbronn-Biberach (DE)

(57) **Zusammenfassung**

Ein Formwerkzeug zum Formen oder kombinierten Formen und Ausstanzen von Behältern aus einer Folienbahn aus thermoplastischem Kunststoff, bestehend aus einem Unterteil mit formgebenden Bauteilen und einem Oberteil mit einer Kopfplatte, Streckhelfern mit je einer Streckhelferstange und einer alle Streckhelferstangen verbindende Streckhelferplatte, die mit einem Antrieb koppelbar ist, wird so ausgebildet, dass das Spiel zwischen Kupplungsteil und Kupplungsbolzen reduziert werden kann und trotzdem beim Einführen des Formwerkzeugs in die Formstation kein seitlicher Versatz der Vorstreckerplatte zur Kopfplatte eintritt.

Erreicht wird dies dadurch, dass zwischen der Kopfplatte des Formwerkzeugs und der Vorstreckerplatte eine Fixiereinrichtung vorgesehen ist, die während des Einbaus des Formwerkzeugs beide Teile miteinander fixiert. Dadurch liegt auch bei straffem Einführen eine so stabile Einheit vor, dass bei einer Schwergängigkeit kein Verbiegen der Streckhelferstangen stattfindet. Nach dem Einbau des Formwerkzeugs wird diese Fixiereinrichtung wieder gelöst.

Die Erfindung ist durch Figur 7 charakteristisch dargestellt.

## Beschreibung

Die Erfindung betrifft ein Formwerkzeug zum Formen oder zum kombinierten Formen und Ausstanzen von Behältern aus einer Folienbahn aus thermoplastischem Kunststoff nach der Gattung des Hauptanspruches.

Aus der DE 199 42 874 A1 ist ein Formwerkzeug zum kombinierten Formen und Ausstanzen von Behältern bekannt, bei dem zum mechanischen Verformen der Folienbahn vor dem Verformen mit Druckluft pro Formnest ein Streckhelfer vorgesehen ist. Die Betätigung der Streckhelfer erfolgt jeweils über eine Streckhelferstange, wobei alle Streckhelferstangen des Formwerkzeugs mit einer Vorstreckerplatte verbunden sind. Diese ist über einen Antrieb höhenverschiebbar gestaltet, wobei dieser bekannterweise pneumatisch, hydraulisch oder mechanisch ausgebildet ist.
Ein Problem besteht darin, dass beim Einbau des Formwerkzeugs in die Formstation der Thermoformmaschine eine Kupplung zwischen dem Antrieb und der Vorstreckerplatte herbeigeführt werden muss. Dazu ist/sind bekannterweise an der Vorstreckerplatte ein/mehrere T-nutenförmige/s Kupplungsteil/e befestigt, in das/die je ein mit dem Antrieb verbundener, im Querschnitt entsprechend gestalteter Kupplungsbolzen eingreift. Das Formwerkzeug wird dazu seitlich eingeschoben und zwischen Kupplungsteil und Kupplungsbolzen muss soviel Spiel sein, dass dieses Einführen auch bei entsprechenden Fertigungstoleranzen und Lagetoleranzen leicht möglich ist. Wenn es an dieser Kupplungsstelle klemmt kann es dazu führen, dass die Vorstreckerstangen nicht mit ihren Führungen im Formwerkzeug fluchten, sondern leicht schief stehen und dadurch ein erhöhter Verschleiß auftritt. Das Spiel zwischen Kupplungsteil und Kupplungsbolzen hat aber einen gravierenden Nachteil darin, dass beim Betrieb des Formwerkzeuges jedes Mal das vertikale Spiel zwischen beiden Teilen vom Kupplungsbolzen durchfahren wird und dieser damit ähnlich eines Hammers auf das Kupplungsteil trifft. Folge ist ein Verschleiß der beiden Bauteile. Dieser wird umso höher, je höher die Fahrgeschwindigkeiten und die Taktzahlen des Formwerkzeuges sind. Durch andere Maßnahmen werden diese beiden Parameter laufend erhöht, was zu diesem erhöhten Verschleiß führt.

Der Erfindung liegt die Aufgabe zugrunde, das Formwerkzeug so auszubilden, dass das Spiel zwischen Kupplungsteil und Kupplungsbolzen reduziert werden kann und trotzdem beim Einführen des Formwerkzeugs in die Formstation kein seitlicher Versatz der Vorstreckerplatte zu den Führungen der Stangen im Formwerkzeug eintritt.

Gelöst ist diese Aufgabe durch die im Hauptanspruch angegebenen Maßnahmen. Indem zwischen der Kopfplatte des Formwerkzeugs und der Vorstreckerplatte eine Fixiereinrichtung vorgesehen ist, die während des Einbaus des Formwerkzeugs beide Teile miteinander fixiert, liegt auch bei straffem Einführen eine so stabile Einheit vor, dass bei einer Schwergängigkeit kein Verbiegen der Vorstreckerstangen stattfindet. Nach dem Einbau des Formwerkzeugs kann diese Fixiereinrichtung wieder gelöst oder entfernt werden.

Ausführungsbeispiele der Erfindung sind anhand der schematischen Zeichnungen näher beschrieben. Es zeigen:
- Fig. 1: einen Längsschnitt durch das Formwerkzeug im Betriebszustand.
- Fig. 2: einen Längsschnitt durch das Formwerkzeugoberteil entlang der Linie B - B in Fig. 5 beim Einbau des Oberteils.
- Fig. 3: eine schematische Darstellung des Einbauproblems.
- Fig. 4: einen Querschnitt durch einen Teil des Oberteils des Formwerkzeugs entlang der Linie A - A in Figur 1.
- Fig. 5: einen Querschnitt durch das Formwerkzeug entlang der Linie A - A in Figur 1 bei einer anderen Ausführung einer Fixiereinrichtung.
- Fig. 6: einen Querschnitt durch das Formwerkzeug entlang der Linie A - A in Figur 1 bei einer weiteren Ausführung einer Fixiereinrichtung.
- Fig. 7: einen Querschnitt durch das Formwerkzeug entlang der Linie A - A in Figur 1 bei einer weiteren Ausführung einer Fixiereinrichtung.

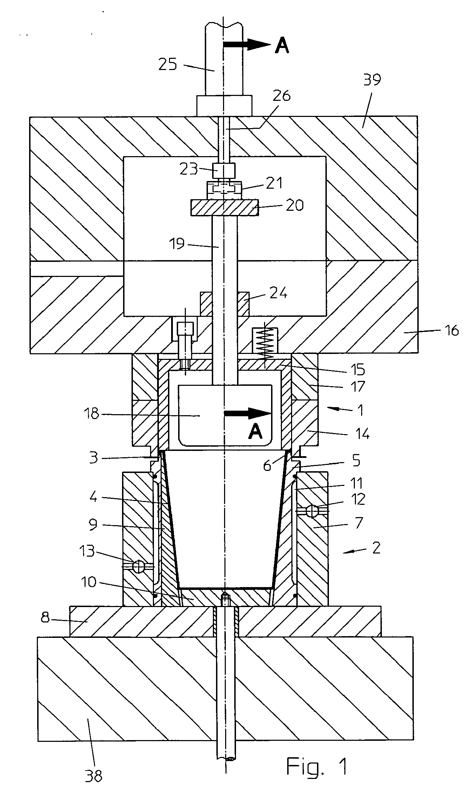

Das nur formend oder wie dargestellt kombiniert formend und stanzend ausgebildete Formwerkzeug gemäß Figur 1 besteht aus einem Oberteil 1 und einem Unterteil 2, die relativ zueinander verschiebbar sind und im Zusammenwirken eine Folienbahn 3 abschnittsweise zu Behältern 4 in bekannter Weise mittels Druckluft verformen und diese anschließend ausstanzen. Hierzu weist das Unterteil 2 pro Formnest einen Schnittstempel 5 mit einer Schnittkante 6 und einen höhenbeweglichen Formboden 10 auf, ferner eine Aufnahme 7 und die Grundplatte 8. Im Schnittstempel 5 kann ein Formeinsatz 9 eingesetzt sein, der im Innern der Form des Behälters 4 entspricht (Fig. 1 links). Schnittstempel 5 und Formeinsatz 9 können aber auch bei einfacheren Formen einstückig ausgebildet sein wie in Figur 1 rechts dargestellt und so die formgebenden Teile des Formwerkzeuges bilden. Zwischen Schnittstempel 5 und Aufnahme 7 ist eine Kühlkammer 11 zur Kühlung der geformten Behälter 4 eingearbeitet, die mit einer Wasserzuführung 12 und einer Wasserableitung 13 versehen ist.

Das Oberteil 1 setzt sich zusammen aus der Matrize 14, der Kopfplatte 16, der Zwischenplatte 17 sowie einem Niederhalter 15 und einem Streckhelfer 18 pro Formnest. Über einen nicht dargestellten Anschluss wird taktweise Druckluft ins Innere des Oberteils geführt. Das Formwerkzeug weist wie dargestellt eine oder mehrere Reihen von Formnestern auf, wobei jede Reihe in der Regel mehrere Formnester beinhaltet. Oberteil 1 und Unterteil 2 sind über nicht dargestellte Führungen zueinander geführt und in die Formstation einer taktweise arbeitenden Thermoformmaschine eingebaut, die einen Untertisch 38 und einen Obertisch 39 aufweist.

Bei einem nur formenden Werkzeug entfallen die Schnittkanten 6 und die Matrize 14 und das Ausstanzen der Behälter 4 erfolgt in einer nachgeschalteten Stanzstation. Anstelle eines Schnittstempels 5 bzw. eines Schnittstempels 5 mit Formeinsatz 9 ist in diesem Fall nur eine Form pro Formnest vorgesehen.

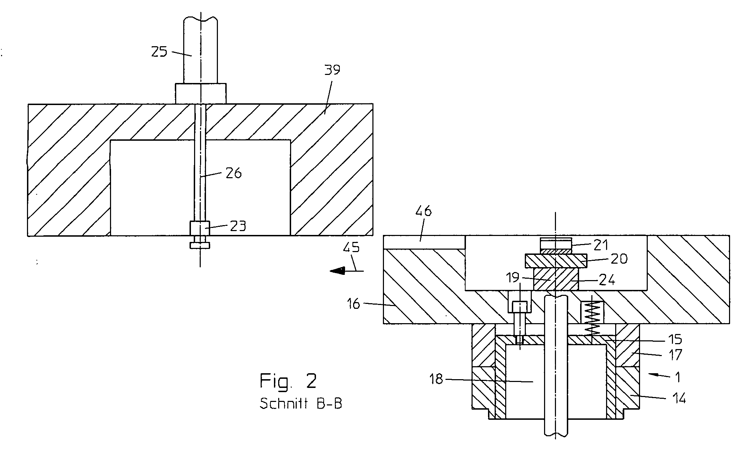

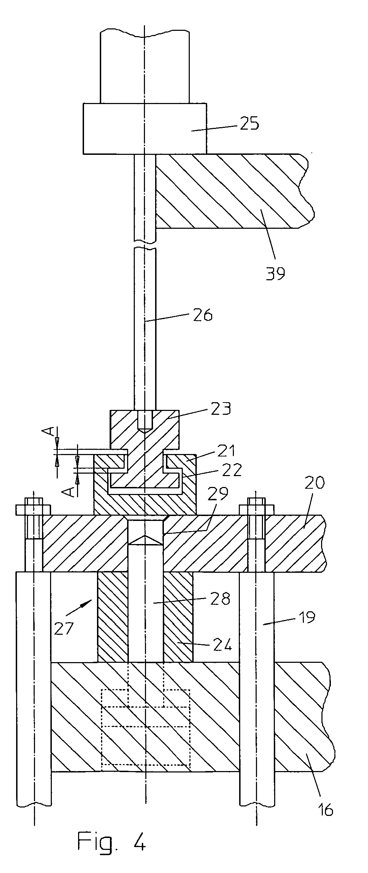

Alle Streckhelfer 18 sind über eine Streckhelferstange 19 mit einer Streckhelferplatte 20 verbunden. An dieser sitzt mindestens ein, bei breiteren Formwerkzeugen zwei Kupplungsteile 21, die je eine T-Nut 22 aufweisen wie in Figur 4 dargestellt. In eingebautem Zustand sitzt in der T-Nut 22 ein entsprechend ausgesparter Kupplungsbolzen 23. Um das Formwerkzeug in die Formstation der Thermoformmaschine in Richtung des Pfeils 45 einbauen zu können (siehe Fig. 2) ist ein gewisses Spiel zwischen Kupplungsteil 22 und Kupplungsbolzen 23 vorgesehen, wie aus Figur 4 zu erkennen ist, und das bezügliche seiner vertikalen Größe mit A bezeichnet ist. Zum Einbau des Formwerkzeugs wird die Streckhelferplatte 20 soweit nach unten gefahren, bis diese auf einer Distanz 24, die an der Kopfplatte 16 befestigt ist, aufsitzt. Damit ist eine reproduzierbare Stellung für den Einbau des Formwerkzeuges gegeben. Die Antriebsstange 26 des Antriebs 25 muss soweit abwärts gefahren sein, dass der mit ihm verbundene Kupplungsbolzen 23 auf Höhe des Kupplungsteils 21 steht. Eine Nut 46 ist zur Vermeidung einer Kollision in der Kopfplatte 16 vorgesehen. Diese Einbaustellung für das Oberteil 1 ist in Figur 2 dargestellt.

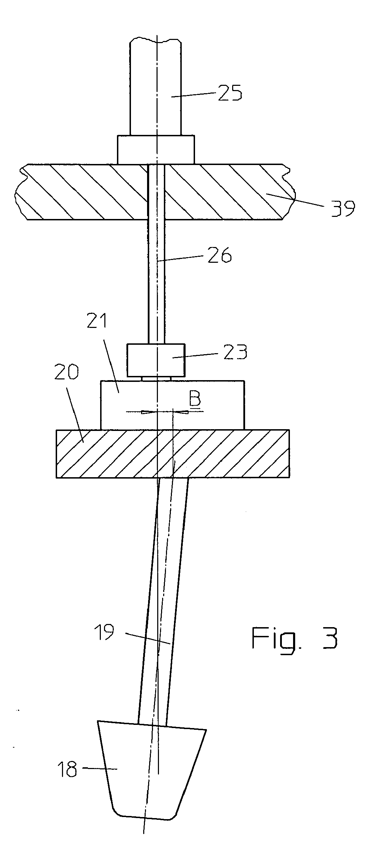

Das vertikale Spiel A ist für den Betrieb des Formwerkzeuges negativ in der Weise, dass es vom Antrieb bei jedem Takt durchfahren wird und Kupplungsbolzen 23 und Kupplungsteil 21 hart aufeinander treffen. Ein Ausschlagen der beiden Teile ist die Folge. Bei einem zu geringen Spiel A entsteht das in Figur 3 schematisch angedeutete Problem. Durch die Schwergängigkeit entsteht eine Verschiebung des Kupplungsteils 21 um das Maß B durch elastische Verformung der betroffenen Teile bzw. durch Spiel in den Bauteilen. Dieser Versatz der Achsen führt dazu, dass ein erhöhter Verschleiß der betroffenen Führungsteile in diesem Antriebssystem eintritt.

Um diese Probleme zu vermeiden wird vorgeschlagen, eine Fixiereinrichtung 27 zwischen Kopfplatte 16 und Streckhelferplatte 20 anzuordnen. Hierzu gibt es verschiedene Gestaltungsvorschläge.

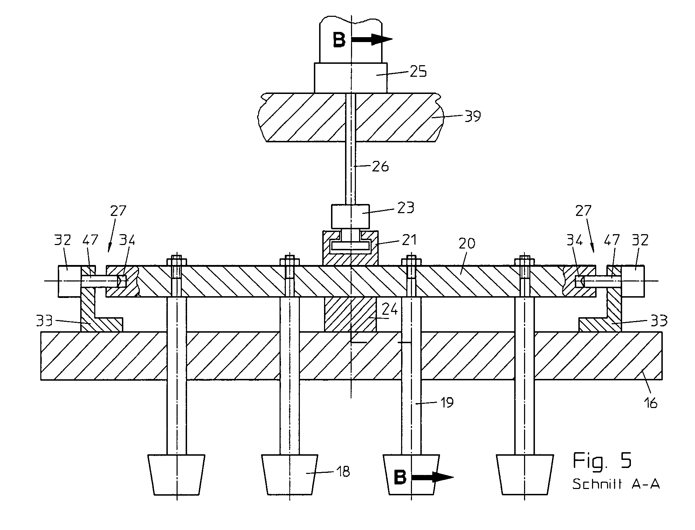

Wie in Figur 4 dargestellt kann die Fixiereinrichtung 27 aus einem Zentrierbolzen 28 bestehen, der in jeder Distanz 24 befestigt ist und der auf eine Bohrung 29 in der Streckhelferplatte 20 trifft. Beim Abwärtsfahren der Streckhelferplatte 20 zur Anlage an die Distanz 24 zum Erreichen der Formwerkzeug-Wechselstellung wird so automatisch eine Fixierung zwischen Streckhelferplatte 20 und Distanz 24, die mit der Kopfplatte 16 verbunden ist, erzielt. Gleiches kann erzielt werden mit einem separaten an der Kopfplatte 16 befestigten Zentrierbolzen 30, der auf eine Bohrung 31 in der Streckhelferplatte 20 trifft. In beiden Fällen wird erreicht, dass auch bei einer Schwergängigkeit beim Einschieben des Formwerkzeugs keine Verschiebung der Streckhelferplatte 20 um das Maß B erfolgt.
In besonderer Ausbildung wird vorgeschlagen, diese Zentrierbolzen 28, 30 höhenverschiebbar auszubilden, sodass folglich ihre Funktion auf die Einbausituation beschränkt ist und sie im Betrieb des Formwerkzeuges in zurückgezogener Stellung stehen. In Figur 5 ist gepunktet eine solche Gestaltung eingezeichnet. Die Betätigung erfolgt vorzugsweise über Druckluftzufuhr an der Unterseite, der Rückzug über nicht dargestellte Federn. Dies verhindert eine Überbestimmung der Führung der Streckhelferplatte 20.

Eine weitere Lösung ist in Figur 5 dargestellt. An der Kopfplatte 16 sitzen, befestigt über Winkel 33, zwei Antriebe 32, die je einen seitlich in eine Aussparung 34 in der Streckhelferplatte 20 einfahrbaren Zentrierbolzen 47 bewegen. Zum Einbau des Formwerkzeuges wird diese Fixierung entsprechend betätigt. Der Antrieb der Zentrierbolzen 47 kann von Hand oder über einen vorzugsweise pneumatischen Antrieb erfolgen. Natürlich sind andere Fixierungen bezüglich der Gestalt denkbar, z.B. V-förmige Aussparungen in der Streckhelferplatte 20 und entsprechend gestaltete Zentrierbolzen 31.

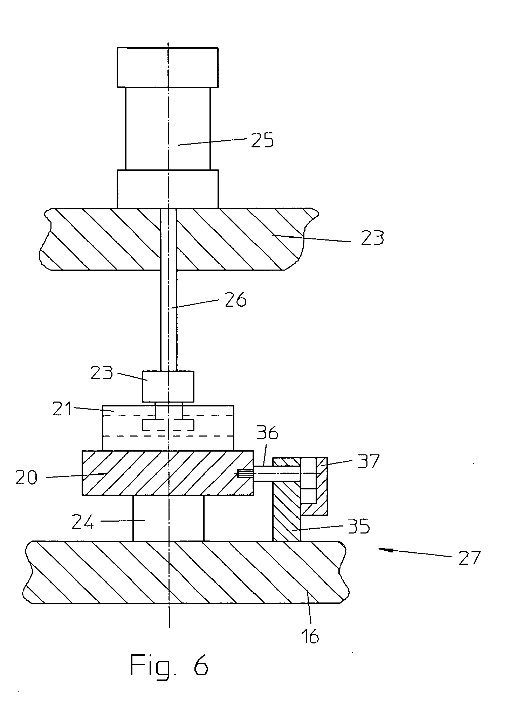

Eine weitere Lösung zeigt Figur 6, bei der auf der Kopfplatte 16 eine Lagerplatte 35 für mindestens einen oder vorzugsweise zwei Verriegelungsbolzen 36 befestigt ist. Der/die Verriegelungsbolzen 36 wird/werden zum Einbauen des Formwerkzeuges mit der Streckhelferplatte 20 verschraubt und nach dem Verschrauben über einen seitlich einschwenkbaren Riegel 37 am Verschieben in Axialrichtung gehindert. Auf diese Weise ist eine starre Einheit Kopfplatte 16 - Streckhelferplatte 20 gegeben.

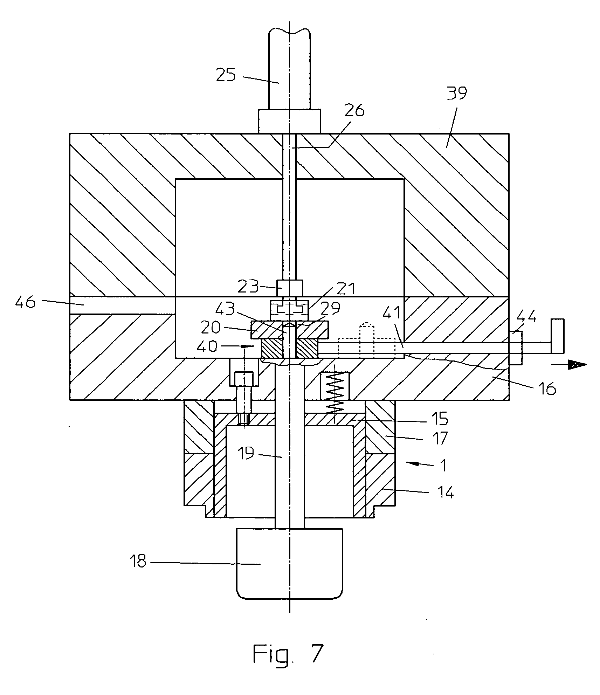

Um für den Einbauzustand des Oberteils 1 die richtige Höhenlage der Streckhelferplatte 20 einzunehmen sind die bereits beschriebenen Distanzen 24 eine Möglichkeit. Dies geht aber nur auf diesem Wege, wenn diese Einbaulage der Streckhelferplatte 20 auch deren unterste Lage beim Betrieb des Formwerkzeugs darstellt. Falls dies nicht der Fall ist muss die richtige Lage über mindestens einen verschiebbaren Anschlag 40 erfolgen, wie er in Figur 7 dargestellt ist. Er besteht je aus einer Führungsstange 41, die in der Kopfplatte 16 geführt ist und einer Distanzplatte 42, deren Oberkante als Anschlag für die Streckhelferplatte 20 dient. Diese Ausführung ist bekannt, wird jetzt jedoch gemäß einer weiteren Ausführungsform der Erfindung erweitert um den Einbau eines Zentrierbolzens 43, der mit je einer Bohrung 29 in der Streckhelferplatte 20 zusammenwirkt. Für eine Fixierung ist es noch erforderlich, die Führungsstange 41 mit der Kopfplatte 16 feststellbar auszubilden, z. B. durch eine Klemmeinrichtung 44. Auch auf diese Weise ist so eine Fixierung der Streckhelferplatte 20 zur Kopfplatte 16 gegeben. Nach Einbau des Formwerkzeugs wird die Distanzplatte 42 in die gepunktet dargestellte Stellung gebracht, sodass die Streckhelferplatte 20 beim Betrieb des Formwerkzeugs tiefer fahren kann als im Einbauzustand.

### Bezugszeichenliste

| | | | |
|---|---|---|---|
| 1 | Oberteil | 41 | Führungsstange |
| 2 | Unterteil | 42 | Distanzplatte |
| 3 | Folienbahn | 43 | Zentrierbolzen |
| 4 | Behältern | 44 | Klemmeinrichtung |
| 5 | Schnittstempel | 45 | Pfeil |
| 6 | Schnittkante | 46 | Nut |
| 7 | Aufnahme | 47 | Zentrierbolzen |
| 8 | Grundplatte | 48 | |
| 9 | Formeinsatz | 49 | |
| 10 | Formboden | 50 | |
| 11 | Kühlkammer | 51 | |
| 12 | Wasserzuführung | 52 | |
| 13 | Wasserableitung | 53 | |
| 14 | Matrize | 54 | |
| 15 | Niederhalter | 55 | |
| 16 | Kopfplatte | 56 | |
| 17 | Zwischenplatte | 57 | |
| 18 | Streckhelfer | 58 | |
| 19 | Streckhelferstange | 59 | |
| 20 | Streckhelferplatte | 60 | |
| 21 | Kupplungsteil | 61 | |
| 22 | T-Nut | 62 | |
| 23 | Kupplungsbolzen | 63 | |
| 24 | Distanz | 64 | |
| 25 | Antrieb | 65 | |
| 26 | Antriebsstange | 66 | |
| 27 | Fixiereinrichtung | 67 | |
| 28 | Zentrierbolzen | 68 | |
| 29 | Bohrung | 69 | |
| 30 | Zentrierbolzen | 70 | |
| 31 | Bohrung | 71 | |
| 32 | Antrieb | 72 | |
| 33 | Winkel | | |
| 34 | Aussparung | A | Spiel vertikal |
| 35 | Lagerplatte | B | Verschiebung Streckhelferstange |
| 36 | Verriegelungsbolzen | | |
| 37 | Riegel | | |
| 38 | Untertisch | | |
| 39 | Obertisch | | |
| 40 | Anschlag | | |

## Patentansprüche

1. Formwerkzeug zum Formen oder kombinierten Formen und Ausstanzen von Behältern aus einer Folienbahn aus thermoplastischem Kunststoff, bestehend aus einem Unterteil mit formgebenden Bauteilen und einem Oberteil mit einer Kopfplatte, wobei in jedem Formnest des Oberteils ein Streckhelfer angeordnet ist und alle Streckhelfer mit einer Streckhelferplatte verbunden sind, **gekennzeichnet durch** eine Fixiereinrichtung (27) zwischen Kopfplatte (16) und Streckhelferplatte (20) zum Verhindern einer horizontalen Verschiebung zwischen Streckhelferplatte (20) und Kopfplatte (16) beim Einbau des Formwerkzeuges in die Formstation einer Thermoformmaschine.

2. Formwerkzeug nach Anspruch 1, **dadurch gekennzeichnet, dass** die Fixiereinrichtung (27) aus mindestens einem mit der Kopfplatte (16) verbundenen Zentrierbolzen (28, 30) besteht, der in eine Bohrung (29, 31) in der Streckhelferplatte (20) eingreift.

3. Formwerkzeug nach Anspruch 2, **dadurch gekennzeichnet, dass** der/die Zentrierbolzen (28) in je einer Distanz (24) angeordnet ist/sind, die als Anschlag für die Streckhelferplatte (20) beim Einnehmen der Werkzeug-Wechsellage dient.

4. Formwerkzeug nach Anspruch 2, **dadurch gekennzeichnet, dass** der/die Zentrierbolzen (30) direkt in der Kopfplatte (16) befestigt ist/sind.

5. Formwerkzeug nach einem der Ansprüche 3 oder 4, **dadurch gekennzeichnet, dass** der/die Zentrierbolzen (28, 30) höhenverschiebbar ausgebildet ist/sind.

6. Formwerkzeug nach Anspruch 1, **dadurch gekennzeichnet, dass** die Fixiereinrichtung (27) aus mindestens zwei Zentrierbolzen (31) besteht, die horizontal in je eine Aussparung (34) in der Streckhelferplatte (20) einfahrbar ausgebildet sind.

7. Formwerkzeug nach Anspruch 1, **dadurch gekennzeichnet, dass** die Fixiereinrichtung (27) aus mindestens zwei Verriegelungsbolzen (36) besteht, mit denen die Streckhelferplatte (20) mit einer an der Kopfplatte (16) befestigten Lagerplatte (35) verbindbar ist.

8. Formwerkzeug nach Anspruch1, **dadurch gekennzeichnet, dass** die Fixier-einrichtung (27) aus mindestens einer über eine Führungsstange (41) horizontal verschiebbaren Distanzplatte (42) besteht, deren Oberkante als Anschlag für die Streckhelferplatte (20) zum Definieren der Einbaulage dient und die je einen Zentrierbolzen (43) aufweist, der mit je einer Bohrung (29) in der Streckhelferplatte (20) zusammenwirkt, wobei jede Führungsstange (41) über eine Klemmeinrichtung (44) mit der Kopfplatte (16) verbindbar ist.
